(19) Europäisches Patentamt
European Patent Office
Office européen des brevets

(11) **EP 2 940 400 A1**

(12) **EUROPEAN PATENT APPLICATION**
published in accordance with Art. 153(4) EPC

(43) Date of publication:
**04.11.2015 Bulletin 2015/45**

(51) Int Cl.:
**F24J 2/38** (2014.01)          **F24J 2/40** (2006.01)
**G01S 3/786** (2006.01)

(21) Application number: **13868787.6**

(22) Date of filing: **18.12.2013**

(86) International application number:
**PCT/ES2013/070893**

(87) International publication number:
**WO 2014/102420 (03.07.2014 Gazette 2014/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.12.2012 ES 201232030**

(71) Applicant: **Abengoa Solar New Technologies, S.A. 41014 Sevilla (ES)**

(72) Inventors:
• **NORIEGA GIL, Pablo**
  **E-41014 Sevilla (ES)**
• **PÉREZ GARCÍA DE CASTRO, Jose Antonio**
  **E-41014 Sevilla (ES)**

(74) Representative: **Elzaburu S.L.P.**
  **C/ Miguel Angel, 21**
  **28010 Madrid (ES)**

(54) **METHOD FOR DETERMINING THE CORRECTION OF TRACKING ERRORS OF SOLAR TRACKING PLATFORMS, CENTRAL PROCESSING UNIT ADAPTED TO PERFORM SAID METHOD AND SOLAR TRACKER COMPRISING SAID CENTRAL PROCESSING UNIT**

(57)   The invention relates to a method for determining corrections for platforms of solar trackers, which can be used to compensate mainly for azimuth deviation and the inclination of the tracker. Depending on the embodiment of the invention, it may also be possible to perform an additional elevation correction. In multiple different embodiments, the invention includes a central processing unit that acts on driving means, providing commands that take account of the corrections calculated to generate set values appropriate for the driving means, thereby obtaining the correct orientation for the platform.

FIG. 2

**Description**

**SUBJECT OF THE INVENTION**

The present invention addresses a method for determining the correction of the solar tracking platform which is able to compensate mainly the azimuth deviation and the inclination of the tracker. According to embodiments of this method, it is also possible to perform an additional correction for elevation.

The invention, according to various embodiments, has a central processing unit which acts on driving means providing commands that take into account the corrections calculated to generate the appropriate set values for the driving means to accomplish the correct orientation of the platform.

**PRIOR ART**

There are different control strategies which exist in the prior art and whose objective is to guarantee a correct orientation of the solar tracker at any given time.

One example of this type of strategy is based on a closed-loop control. This system bases its operation on a feedback of the tracking error at each instant, normally through the use of an auxiliary device. The measurement of said device is interpreted and utilized by control means which in turn act on driving means of the solar tracking platform so that the platform maintains a correct orientation.

One example of an auxiliary device is a tracking sensor making use of a plurality of areas sensitive to the solar radiation situated on a plane and distributed about a point; and an opaque element situated above said point, at a distance from the plane, and intended to cast a shadow on the plane where the sensitive areas are. When the orientation of the plane where the areas sensitive to solar radiation are situated is perpendicular to the radiation, the shadow of the element situated above this plane casts a shadow on the point about which the sensitive areas are distributed without any of them seeing a reduced radiation reading. On the contrary, when the plane is not oriented perpendicular to the direction of radiation, the shadow covers some of the sensitive areas. Depending on which sensitive area is totally or partly covered, it is possible to determine the degree of deviation of the orientation of the plane of this auxiliary device.

The closed-loop control strategies based on feedback using auxiliary devices have various drawbacks. First of all, dirt on the device may frustrate the reading, since shadows may be generated which are interpreted as deviations of the orientation device. A not very large particle may prevent the correct orientation of an entire solar energy collection module and this might be installed in a place not easily or immediately accessible.

Another drawback of this type of strategy is that the auxiliary devices measure the error in their orientation with respect to the direction of incidence of the rays and not the error in orientation of the entire system. It is therefore necessary to guarantee that the tracking sensor and the tracker have the same orientation. Even so, this orientation of one relative to the other is not always perfect, being subjected to installation errors, and it can be modified due to problems, such as deformation or misalignment of the structural elements.

On the other hand, there are hybrid control strategies whose operation is based on an open-loop control where, prior to each movement, a series of mathematical operations are carried out to generate corrected reference positions, by the application of correction factors to the theoretical positions resulting from the calculation of the solar epherimides. Said correction factors are obtained by the solution of mathematical models based on one or more calibrations of the tracker. Because such models are highly nonlinear, it is necessary to use advanced algorithms for the solving of nonlinear systems by iteration methods, which in general do not guarantee the convergence and imply an elevated computation expense, and normally require an elevated number of calibrations to achieve acceptable results.

The present invention is a method which determines the correction of tracking errors of a solar tracking platform due to causes such as deformations of the structure, slack, installation errors, and others. The elevation and azimuth deviations, which are considered to be constant, are commonly known by the English term "offset", that is, elevation offset and azimuth offset. The use along the description of the term deviation or error throughout the specification shall be interpreted as having the same meaning as the English term offset, as used in the course of the technique of the invention.

The method of the invention allows one to generate, from initial reference positions based on the calculation of solar ephemerides, new corrected reference positions so that the platform is oriented adequately, despite the aforementioned deviations. The invention establishes a method of determining the error correction. Once the new corrected reference positions are established, according to certain embodiments of the invention one has a control system based on a hybrid control strategy in which one does not need to solve nonlinear mathematical models in order to obtain the correction factors, so that with various calibrations it is possible to substantially improve the performance with respect to an open-loop control.

**DESCRIPTION OF THE INVENTION**

The present invention is a method for determining the correction of tracking errors of a solar tracking platform.

The device for which the correction is determined is a solar tracker which comprises:

    *a)* a *structural support element of the platform, ar-*

*ranged on a fixed base, where this fixed base is associated with a first orthogonal system of coordinates (x,y,z) with the z coordinate preferably oriented to the zenith.*

One preferably considers as the fixed base a surface ideally corresponding to the ground, which serves in turn to establish the first system of coordinates, known as the first system of coordinates (x,y,z). By default, the coordinate systems will be Cartesian and orthonormal. There are devices which provide orientation values in spherical coordinates, for example. In these cases, it is understood that by a change of coordinates the same vector can be expressed in the Cartesian coordinate system. The same thing occurs if the coordinate system is not orthonormal: it will be sufficient to establish the change of base for the same vector to be expressed in the orthonormal system (x,y,z). For convenience, even though not strictly necessary for the invention, a system of coordinates is adopted in which the coordinates $x$ and $y$ correspond to axes parallel with the ground and the coordinate $z$ is oriented toward the zenith. Likewise, the preferred example takes the axis corresponding to the coordinate $x$ as oriented to the south and the axis corresponding to the coordinate $y$ as oriented to the east.

*b) the platform being joined to the structural element by a link having one or more degrees of freedom $Y_j, j = 1.2, ...$ along one of more axes of rotation $E_j, j = 1,2, ...$ with respect to said structural element for its orientation in a particular angular position.*

The structural element is placed on the ground and the platform with movement capability is installed on top of this structural element. The movement is due to the fact that the structural element and the platform are joined by a link having one or more degrees of freedom $Y_j, j = 1,2, ...$ along one or more axes of rotation $E_j, j = 1,2, ...$ with respect to said structural element. The link having one or more degrees of freedom is not necessarily a point link but instead can be comprised of a kinematic chain with consecutive links where, for example, each of them provides an additional degree of freedom. The platform is the movable element and this can have, in different examples, photovoltaic panels or be a heliostat reflector. One particular example is a pedestal on which the platform is located where the latter contains a plurality of photovoltaic concentrator modules.

*c) said structural element is associated with a second orthogonal system of coordinates (x',y',z') linked to the structural element at a point situated before the link having one or more degrees of freedom, this second system of coordinates being essentially parallel to the first system of coordinates (x,y,z) except for deviations, including but not limited to inclination deviations, azimuth deviations, elevation deviations, deviations due to slack or other installation errors or*

*any combination of the foregoing, with respect to the fixed base.*

The objective of the invention is to adequately orient the platform despite deviations due to the aforementioned causes: slack, installation errors, inclination or azimuth deviations, among others. These errors are due principally to the structural element, which is why a second system of coordinates (x',y',z') is used, also linked to the structural element, and said system of coordinates is situated at a point located before the link having one or more degrees of freedom.

Because the first system of coordinates is linked to the ground and this second system of coordinates is linked to the point of the platform which accumulates the different deviations affecting the platform, one should not interpret the system of coordinates as being a reference system in space. This system of coordinates should be interpreted as coordinates which can be expressed in a vectorial base on which free vectors are represented which determine orientations and which can be manipulated with the mathematical tools used in the processing of vectorial spaces.

Considering small deviations, the first system of coordinates and the second system of coordinates are essentially parallel. The method of determination of the tracking errors has the purpose of determining a change such that, given a particular tracking direction of the platform, said change corrects the deviations which result in the tracking errors of said platform. The change can be expressed by means of a rotation matrix which transforms the tracking direction into a second direction, the direction of command for the driving means in order to compensate for the tracking errors due to the deviations.

Among the deviations to which the platform can be subjected can be mentioned, without being limited to, inclination deviations, azimuth deviations, elevation deviations, deviations due to slack, deviations due to installation errors, or any combination of these. The method of the invention proposes the use of a rotation matrix which is able to determine the corrected tracking direction so that at least the error due to the inclination deviation of the structural element and the error due to the azimuth deviation are eliminated.

Although this rotation matrix is able to determine the correction for the inclination deviation and the azimuth deviation, it is not able to correct the elevation error. For this reason, according to a particular example of the invention which improves the correction, before performing the correction by a rotation matrix one performs an elevation correction as will be described in the detailed specification of the invention.

*d) measurement means to determine the orientation $p=(p_x, p_y, p_z)$ of the platform with respect to the sun, in particular, as expressed in the second system of coordinates (x',y',z).*

The calculation of the rotation matrix will be evaluated, as shall be detailed hereinafter, by making use of pairs of points which are used as data points for the construction of a system of equations to be solved. The unknown of the system of equations is the rotation matrix. Each pair of points has a point corresponding to the coordinates of the sun, as expressed in the system of coordinates *(x,y,z)*, which the tracking platform needs to adopt, and another point corresponding to the coordinates which need to be used at the moment of commanding the movements of the platform so that the platform adopts the first point (the measured position point of the sun), as expressed in the system of coordinates *(x',y',z')*. This second point is the result of a measurement of the orientation of the platform with respect to the sun, carried out on the basis of the so-called "measurement means". Through a calibration operation, one can obtain/calculate/determine the second point of the aforementioned pair.

The measurement means for determining the orientation of the platform can be tracking sensors or more complex means. Among the more complex means one finds control means able to establish the orientation of the platform by applying a set of trajectories, such as a spiral, to determine the correct direction depending on the energy taken up in the course of each movement.

> *e) a processing unit connected at least to the measurement means.*

The method of determination of the correction for tracking errors of the platform carries out a set of evaluations, in particular, a processing of coordinates and the solving of a system of equations, which is evaluated in a processing unit. Examples of processing units are programmable microprocessors.

This processing unit does not have to be a unit dedicated solely to performing the different stages of the method, but rather it can also carry out other tasks associated with other methods or even perform determinations of corrections for more than one solar tracker.

The most interesting example is the case where the processing unit is also charged with the management of the driving means of the platform so that, once having determined the correction of the tracking error of the platform, the appropriate orders are given to orient the platform in accordance with the corrected coordinates.

As already indicated, the processing unit is adapted to execute instructions for the determination of the correction of tracking errors of the platform so as to at least correct inclination deviations and azimuth deviations, and it does so in accordance with the following steps:

- *establish values of coordinates $s = (s_x, s_y, s_z)$ tracking the platform at the sun in the first system of coordinates (x,y,z).*

The objective of the solar tracker is for the platform to perform a sun tracking movement as faithfully as possible. The invention corrects the deviations of the platform by modifying the coordinates $s = (s_x, s_y, s_z)$ of the sun to those it should be tracking at. The invention proposes a correction by means of a rotation matrix such that, after determining the correction, the control of the driving means of the platform makes use of the corrected coordinates instead of the coordinates of the sun $s = (s_x, s_y, s_z)$.

The solar tracking platform, as already indicated, can be a structure with photovoltaic panels, a solar concentrator, or at least a mirror (or group of mirrors) which redirects the incident radiation, these being only some examples. In the first two instances, the platform has to be oriented to the radiation source, the sun. In the last instance, the orientation has to be such that the reflection of the incident radiation coming from the sun reaches the solar receptor. This direction is not the direction of the sun but rather it is determined by the position of the mirror with respect to the heliostat and the coordinates of the sun. In either case, we shall make equal use of the term coordinates of the sun $s = (s_x, s_y, s_z)$ which should be interpreted in the broad sense as being the tracking coordinates which the platform needs to adopt in correct manner depending on the coordinates where the sun is situated at a particular moment in time t. The "correct form" for a heliostat will be that which enables the correct reflection.

The coordinates of the sun $s = (s_x, s_y, s_z)$ can be calculated, for example, by means of the equations of the sun or by means of tables with the solar ephemerides.

- *provide n pairs of positions, at least three, $s_i = (s_{ix}, s_{iy}, s_{iz})$, i = 1,2, ..., n and Pi = ($p_{ix}, p_{iy}, p_{iz}$), i = 1, 2, ..., n, where $s_i$ are Cartesian coordinates of ephemerides of the sun, as expressed in the first system of coordinates (x,y,z) and $p_i$ are the Cartesian coordinates to be adopted by the platform in tracking at said ephemerides after a correction of the deviations determined or estimated by the measurement means, as expressed in the second system of coordinates (x',y',z').*

It is in this stage where one takes the data points enabling the construction of a system of equations for calculating the rotation matrix. One takes pairs of points which in each pair of points one point is the coordinates of the sun and the other point is the one which it has been determined, for example by a calibration, that it needs to be adopted for use as tracking coordinates by the solar tracking platform which is subjected to deviations, so that it points at the coordinates of the sun.

- *establish the system of equations P x R = S , which is determined if n = 3 and overdetermined if n > 3 where:*

o *the matrix P is formed by the vectors $p_i$ = $(p_{ix}, p_{iy}, p_{is})$, i = 1, 2, ... , n arranged in rows,*
o *the matrix S is formed by the vectors $s_i$ = $(s_{ix}, s_{iy}, s_{iz})$, i = 1, 2, ... , n also arranged in rows in the same order as for the vectors $p_i$,*
∘ *and R is a 3 x 3 matrix.*

This particular step of the method is clearly expressed by having the vectors $p_i$ and the vectors $s_i$ in the form of rows; however, it is possible to express the same rotation by making use of an equivalent system where the vectors $p_i$ and $s_i$ are arranged in columns. What is more, the system of equations deriving from this matrix expression can be represented by developing the matrix product. In all cases, the same system of equations is established, which is used in the identification of the step, since there is only one distinct form of expression of the same mathematical conditions. The use of any one of the forms of expression of this system of equations is considered to be equivalent.

- *solve the system P x R = S for the unknown R,*
- *produce the result of the matrix R which enables a correction of the tracking vector of the platform (3) per p = $(p_x, p_y, p_z)$ = $(s_x, s_y, s_z) \times R^{-1}$ for at least the inclination and azimuth correction with respect to s = $(s_x, s_y, s_z)$.*

Once the rotation matrix $R$ has been determined as the solution of the equations established, it is this matrix which lets us perform the correction of the inclination and azimuth errors by simply using the tracking vector of the platform, that is, that which is expressed by $p$ = $(p_x, p_y, p_z)$ = $(s_x, s_y, s_z) \times R^{-1}$.

The determination of the correction of tracking errors is independent of the correction action for said errors. The determination of the correction provides a rotation matrix, which is turn provides the vector to be used as a reference vector for the driving means which move the platform to carry out its correct or corrected orientation.

The trajectory of the platform tracking the sun requires a sequence of steps or advancements occurring every particular instant of time in the course of the day. The determination of the correction can be done, for example, at a particular moment in the course of the day, or even at several moments in the course of the day, by calculating the rotation matrix R which lets us calculate in the following steps each of the corrected tracking vectors p per p = $(p_x, p_y, p_z)$ = $(s_x, s_y, s_z) \times R^{-1}$ where $(s_x, s_y, s_z)$ are the coordinates of the sun at each step. It would also be possible to calculate the correction matrix $R$ on particular days of the year. After having determined one or more correction matrices at distinct moments of the day or even on distinct days of the year, the tracker will use the suitable matrix $R$ of the recent matrices calculated to perform the correction of position.

The correction will be done at each of the steps such that, given the coordinates of the sun $(s_x, s_y, s_z)$ at each instant of time, one will make use of the coordinates $(p_x, p_y, p_z)$ which take into account the deviations giving rise to the errors corrected by the rotation matrix $R$.

Even so, the matrix $R$ can be recalculated by the method of the invention using pairs of points $p_i$ and $s_i$. The set of pairs of points can be:

- all new points resulting from *n* measurements, or
- the set of previous pairs of points, additionally using one or more new points, incrementing the number of pairs of points; or
- the result of using a set of points already employed in a previous correction and replacing one or more previous points by new points.

Once the new matrix **R** has been calculated, the following corrections can make use of this new matrix **R**. It is possible to make use of this new matrix because in various embodiments the matrices are saved and a control unit determines which correction matrix should be used. The sample embodiments will describe other particular ways of determining the correction to optimize the tracking direction of the platform.

## DESCRIPTION OF THE DRAWINGS

These and other characteristics and advantages of the invention shall be revealed more clearly based on the following detailed specification of a preferred embodiment, given solely as an illustrative example and not limited to this, with reference to the accompanying figures.

Figure 1 This figure shows a diagram relating a system of Cartesian coordinates with a cylindrical system of coordinates.
Figure 2 This figure shows a diagram of a solar tracker according to one sample embodiment of the invention.
Figures 3a-3c This sequence of figures shows the same diagram of a tracker to identify the three elemental rotations which can express the rotation matrix $R$.
Figure 4 This figure shows a graph of the evolution over time of the tracking error of a solar tracker, making use of a correction via a rotation matrix calculated by using 2 real-time measurements and one virtual point (curve A); and the correction via 3 real-time measurements with no virtual points (curve B), assuming in general nonzero errors in the calibration process. Both real point and virtual point will be defined in the description of the sample embodiment.
Figure 5 This figure shows a graph of the evolution over time of the tracking error of a solar tracker (curve C) as well as the tracking error when a correction has been applied by a rotation matrix without correction of elevation error (curve D), assuming zero errors in the calibration process.

## DETAILED EXPLANATION OF THE INVENTION

The present invention is a method of determining the correction of tracking errors of a solar tracking platform.

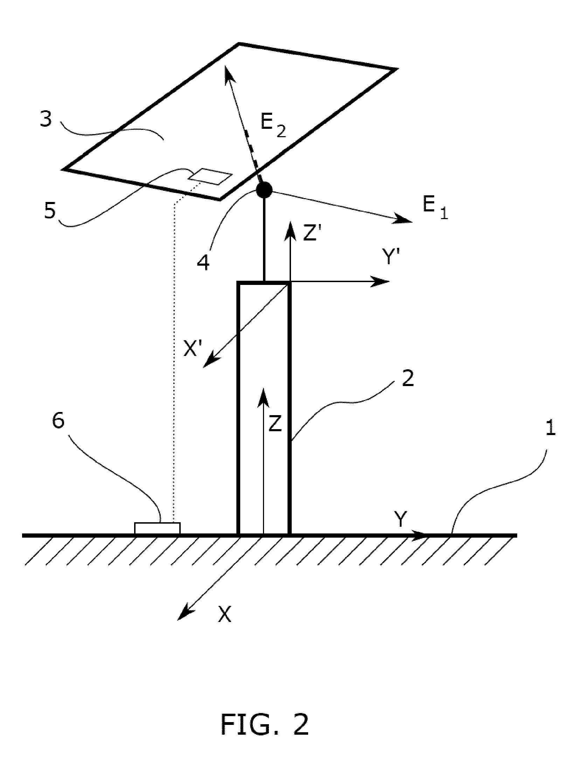

Figure 2 shows a diagram with the basic elements of a sample embodiment. The invention comprises a structural element (2) which is integrated with the ground (1). In this sample embodiment, the structural element (2) is shown as a vertical pedestal. The ground lets us establish an orthogonal system of Cartesian coordinates $(x,y,z)$ where in this example the axis $z$ is vertical and oriented to the zenith, the axis $y$ is horizontal and extends to the right, representing east, and the axis $x$ is perpendicular to the previous ones, although being shown oblique in the perspective used, and oriented to the south.

On top of the structural element (2) is a platform (3) having two degrees of freedom, joined to the structural element (2) by a link (4) which is what enables the existence of the two degrees of freedom along two axes of rotation, $E_1$ and $E_2$.

In this sample embodiment, the platform (3) is a structure having photovoltaic panels which should be oriented to the sun over the course of the day to maximize the incident solar radiation. In the case of implementing the invention in the controls of a heliostat, the orientation of the platform (3) which contains the reflecting surface is not toward the sun, but instead it is the adequate orientation to achieve the correct reflection of the solar radiation onto the central receptor. Whenever making use in the description of the coordinates tracking at the sun, for the implementation in heliostats it should be interpreted that these coordinates are the coordinates giving rise to the correct reflection of the solar radiation onto the central receptor.

In order to carry out the tracking of the sun, the solar tracker has driving means (not shown graphically) which allow a moving of the platform (3) in accordance with its two degrees of freedom. These driving means, in this sample embodiment, are controlled by a processing unit (6) which has other tasks and functionalities also assigned to it.

The processing unit (6) is adapted to establish in the course of the period of capture of solar energy a plurality of steps spaced apart by a predetermined interval of time. In each of these steps, the position of the sun $s = (s_x, s_y, s_z)$ is determined. Before a particular position $s = (s_x, s_y, s_z)$ of the sun, the processing unit (6) operates the control of the driving means so that the platform (3) takes up a tracking direction in accordance with this vector. However, the platform (3) has deviations due to different causes such as an improper installation, the presence of slack in the mechanisms, and others.

On top of the structural element (2), before the link (4) with the platform (3), there is established a second system of coordinates $(x',y',z')$. The deviations give rise to the second system of coordinates $(x',y',z')$ not being coincident with the first system of coordinates $(x,y,z)$ even though the deviations usually need not be large; even so, small deviations can drastically reduce the output of a solar energy capturing device or even render it inoperative, as is the case with the use of solar concentrators which can lose their focus.

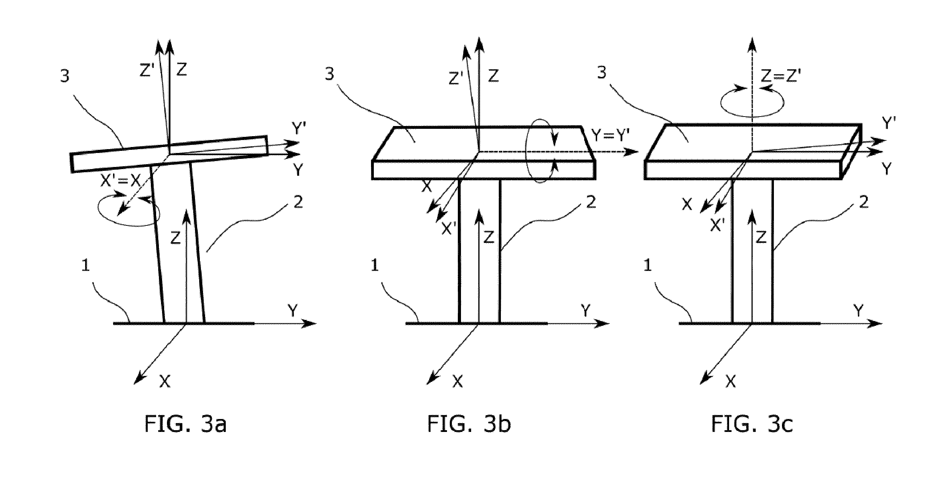

Figure 3 shows schematically a structural element (2) on top of which is placed a platform (3) which has been oriented to the zenith along coordinates (0,0,1). Even so, the deviations of inclination of the structural element (2) and of azimuth translate into rotations of the second system of coordinates $(x',y',z')$ with respect to the first $(x,y,z)$.

The first system of coordinates $(x,y,z)$ associated with the ground is represented on the ground and also together with the second system of coordinates $(x',y',z')$ to identify each of the elemental rotations since each system of coordinates, upon establishing a vectorial base on which a free vector is expressed, said vectorial base does not have a point in space defined as its origin.

Thus, when one says that the first system of coordinates $(x,y,z)$ is associated with the ground and the second system of coordinates $(x',y',z')$ is associated with a near point of the kinematic chain which provides movement to the platform (3), one has to interpret that the first system of coordinates $(x,y,z)$ has an orientation defined principally by the plane of the ground and that the second system of coordinates $(x',y',z')$ has an orientation defined by the changes in orientation imposed by the distinct deviations which the structural element (2) has suffered.

Figure 3a shows the inclination of the structural element (2) in the east-west direction. This inclination is a positive rotation about the axis $x$. As a result of this elemental rotation, the axis $x'$ coincides with the axis $x$ while the axes $y'$ and $z'$ are rotated with respect to the axes $y$ and $z$ respectively. The axes about which the rotation occurs are represented by broken line and with a double circular arrow.

Figure 3b shows the inclination of the structural element (2) along a second elemental angle, corresponding to the north-south direction. The platform (3) has been represented by a schematic perspective which shows the platform projecting from the plane of the drawing contained in the plane defined by the axes $y$ and $z$. This rotation is a rotation about the axis $y$ such that $y'$ coincides with $y$. The axis $x'$ is slightly shifted downward with respect to the horizontal direction defined by the axis $x$; and the axis $z'$ is slightly inclined outside the plane of the drawing with respect to the vertical defined by the axis $z$.

Figure 3c shows a rotation of the platform with respect to the vertical axis $z$. In strict perspective, the upper surface of the platform would not be visible, but for better comprehension it is shown in order to indicate the change in orientation of its rectangular configuration. According to this rotation, the axis $z'$ coincides with the axis $z$ and the axes $x'$ and $y'$ are rotated and contained in the horizontal plane parallel with the ground.

The method of the invention already described proposes a matrix $R$ which is a rotation matrix that can be expressed as the composition of the three elemental rotations applied consecutively, as described above. If $R_x$, $R_y$ and $R_z$ represent the elemental rotation matrices, the matrix $R$ resulting from the composition of elemental rotations can be expressed as $R = R_x R_y R_z$

Of all possible deviations of the orientation of the platform (3) with respect to the first system of coordinates, the determination of the rotation matrix $R$ makes it possible to perform a correction of the errors of inclination of the structural element (2) and also of the errors of azimuth (or azimuth *offset* using the English term). This latter is also possible since the axis perpendicular to the platform (3) is the axis about which the azimuth angle is defined.

As has been described, the construction of the system of equations $P \times R = S$ requires $n$ pairs of points. Of each pair of points, one point is the Cartesian coordinates of the tracking of the platform (3) at the sun $s = (s_x, s_y, s_z)$ as expressed in the first system of coordinates $(x,y,z)$; that is, the coordinates which should be used to order the driving means to point the platform (3) at the sun, if said platform were ideal without any deviation. The other point is the Cartesian coordinates to be adopted by the platform (3) in tracking at said epherimides after a correction of the deviations determined or estimated by the measurement means, as expressed in the second system of coordinates $(x',y',z')$.

This second vector $p = (p_x, p_y, p_z)$ is calculated by making use of measurement means (5) which in Fig. 2 are shown connected to the processing unit (6). An example of this determination consists in carrying out a closed-loop calibration until one determines the correct orientation of the platform (3) so that it points at the real position of the sun $s = (s_x, s_y, s_z)$. The coordinates giving rise to the correct orientation of the tracking of the platform (3) as determined in the calibration are $p = (p_x, p_y, p_z)$.

The points determined by a calibration such as has been indicated are known as real points. If the coordinates of the vector $p = (p_x, p_y, p_z)$ are calculated and not the result of a calibration, they are known as virtual. The use of these virtual points, not obtained directly from calibrations, is justified further below.

As an example, a customary procedure is to order movements in a spiral formed by straight segments. Each advancement is carried out along a straight segment within a particular rectangle, defining a window containing the coordinates of the sun (for example, advances in azimuth and elevation are performed in alternation, thus generating the spiral by incrementing its size) and over the length of said segment one verifies where the maximum captured radiation was obtained. After each pair of straight advancements, a new and larger search rectangle is defined and this is repeated until the position of the sun is found. The coordinate determined for the sun will be the vector $p = (p_x - p_y, p_z)$ expressed in the system of coordinates $(x',y',z')$.

Thus, as a result of this procedure we have a correspondence between the vector $s = (s_x, s_y, s_z)$ and the vector $p = (p_x, p_y, p_z)$ and therefore a pair of points. The minimum condition for constructing the system of equations is to have at least 3 pairs of points. If the number of points is 3, the system is determined, and if it is more than three the system is overdetermined, so that one considers the solution of the system to be the one which minimizes the residual. The preferred method of minimization is the method of least squares.

Of particular relevance is the case when measurements are known that have greater importance than others. In these cases, the invention incorporates the use of weighting matrices $W$ whose components are all positive. In this way, the minimization method solves the matrix $R$ as $R = (P^T \times W \times P)^{-1} P^T \times W \times S$.

If covariances between measurements are not incorporated, that is, pairs of vectors $p$ and $s$ are correlated, then the matrix $W$ is a diagonal matrix with the elements of the diagonal strictly positive.

It is enough to use the matrix W as the identity matrix to verify that the weighted expression $R = (P^T \times W \times P)^{-1} P^T \times W \times S$ recovers the expression $R = (P^T \times P)^{-1} P^T \times S$.

The method according to the independent claim makes use of 3 or more pairs of points $p$ and $s$. According to one sample embodiment of the invention, one or more pairs of points do not come directly from a measurement obtained via the measurement means (5) but instead are virtual points, that is, obtained via calculation by mathematical operations based on other points which have been measured.

A sample embodiment for the obtaining of a virtual point is one which results from vector multiplication of two points obtained from a measurement. Thus, from the set of $n$ pairs of positions $s_i = (s_{ix}, s_{iy}, s_{iz})$, $i = 1, 2, ..., n$ y $p_i = (p_{ix}, p_{iy}, p_{iz})$, $i = 1, 2, ..., n$, at least one pair of positions $s_j = (s_{jx}, s_{jy}, s_{jz})$ and $p_j = (p_{jx}, p_{jy}, p_{jz})$ corresponds to a virtual point calculated such that the coordinates $p = (p_x, p_y, p_z)$ for tracking of the platform (3) in the second system of coordinates $(x',y',z')$ and $s = (s_x, s_y, s_z)$ for tracking in the first system of coordinates $(x,y,z)$ are obtained by the following vector calculation $s_j = s_k \times s_r$, and $p_j = p_k \times p_r$ with $k$ and $r$ different from $j$ and different from each other; and both of them corresponding to point already determined by the measurement means (5).

A first alternative method consists in generating intermediate matrices $P'$ and $S'$ from three already existing measurements; and by calculating the inverse of the transposition of each intermediate matrix, one obtains the pairs of virtual points:

$$\begin{pmatrix} s_1 \\ s_2 \\ s_3 \end{pmatrix} = (S'^T)^{-1}; \quad \begin{pmatrix} p_1 \\ p_2 \\ p_3 \end{pmatrix} = (P'^T)^{-1}$$

where the three pairs $s_i$, $p_i$ $i$ = 1, 2, 3 are the virtual points.

A second alternative method consists in generating intermediate matrices $P'$ and $S'$ not necessarily square matrices from three or more already existing measurements. In this second alternative method, the pairs of virtual points are obtained by the following expressions:

$$\begin{pmatrix} \tilde{s}_1 \\ \tilde{s}_2 \\ \tilde{s}_3 \end{pmatrix} = (S'^T P')^{-1}; \quad \begin{pmatrix} \tilde{p}_1 \\ \tilde{p}_2 \\ \tilde{p}_3 \end{pmatrix} = (P' P'^T)^{-1}$$

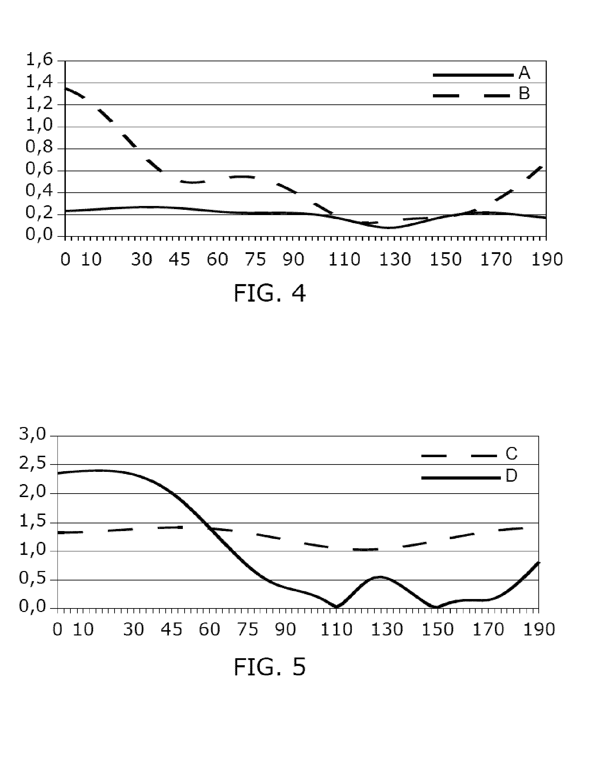

Figure 4 shows a graph of the evolution over time of the tracking error of a solar tracker making use of a correction by a rotation matrix calculated by using 2 real measurements and one virtual point (solid curve A) as compared to the correction by 3 real measurements with no virtual points (broken curve B).

The use of virtual points makes it possible to generate additional points when not having sufficient measurements to construct the system of equations $P \times R = S$. The minimum of points to use is 3. If only there are two measurements, the addition of a virtual point lets one solve the system $P \times R = S$ provided that the virtual point is not a linear combination of the two measured points already present.

In the case when the virtual points are constructed by using the vector product of two measured points, the virtual points force orthogonality restrictions in the calculation of the solution.

In the example shown in Fig. 4 one observes a behavioral rule whereby if no virtual points are generated and the calibrations are not perfect, the calculated matrix will tend to minimize the errors at positions of the sun near the positions of the sun at the instants of calibration, at the cost of significantly increasing the point error as the position of the sun is further away from the positions at which the calibrations were made. This effect is avoided to some extent by introducing orthogonality restrictions in the calculation of the solution matrix, which is precisely what is done by introducing virtual points generated in adequate manner.

It was indicated above that the correction which allows the rotation matrix R corrects both the errors due to inclination and azimuth deviations and that on the contrary the elevation angle cannot be corrected by means of the rotation matrix $R$.

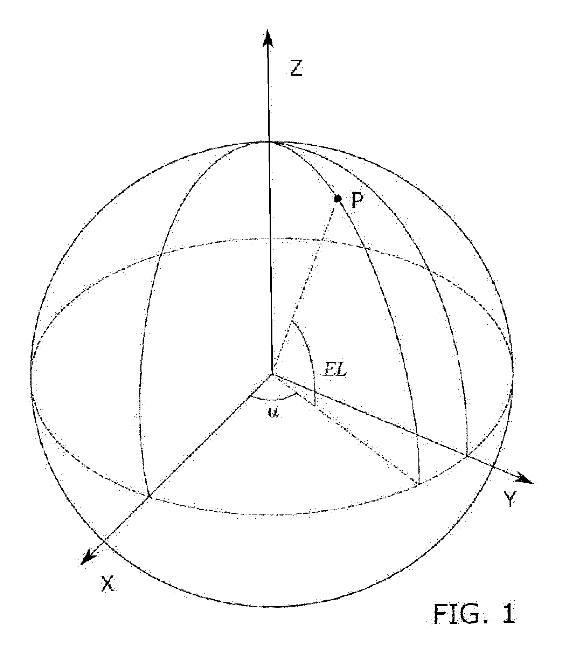

It is also part of the invention the correction of elevation angle. Figure 1 shows schematically the relation between a system of cylindrical coordinates and a Cartesian system of coordinates where the radius is the unit radius, since for our purposes where the modulus of the position vector is unity only the azimuth angle $\alpha$ and the elevation angle $EL$ are relevant.

The change from spherical coordinates to Cartesian coordinates lets us relate both angles to the Cartesian coordinates.

Given the platform (3) of the sample embodiment with various errors due to deviations, including the elevation deviations, the invention proposes performing the correction of the elevation before performing the correction via the rotation matrix R according to any of the previously considered methods.

The method consists in providing a plurality of values of the elevation deviation $\delta EL_k$, $k$ = 1,2,...For each of these values considered by hypothesis as being the value which corrects the elevation deviation of the platform (3), the system is constructed $P'_k \times R'_k = S$ using in place of the vectors $p$ the vectors $p'$ resulting from incrementing $p$ with the correction taken by hypothesis $\delta EL_k$. If the value of $\delta EL_k$ were the exact value correcting the deviation in the elevation error, then the matrix $R'_k$ would be the rotation matrix which corrects the rest of the deviations. In this same assumption, the matrix $R'_k$ is an approximation to a rotation matrix. If it is a rotation matrix, it is verified that it is an orthonormal matrix. The matrices usually obtained will not be orthonormal and they will be more removed from orthonormality as the deviations due to elevation errors are greater.

The metric $e(M) = ||M \times M^T - I||$ has been adopted, where $I$ is the identity matrix, to establish the degree of distance of the matrix $M$ from the condition of orthonormality, understanding that it is a continuous function in its arguments and that the value of the metric will be zero for an orthonormal matrix $M$.

Thus, given the continuity of the metric as a function of its arguments, from a set of values $\delta EL_k$, $k$ = 1,2,.. the value whose metric $e_k = e(R'_k)$ results in the value closest to zero will be the one corresponding to the value of the elevation correction closest to the solution.

Having established the minimum value, the method itself establishes that $R'$ corresponds to the rotation matrix resulting from the invention and therefore it coincides with $R$.

There are different ways of arriving at the solution. A first method of reaching the solution consists in making use of an iteration method where values of $\delta EL_k$ are proposed and iterations are done until reaching the minimum of the function $e_k = f(\delta EL_k)$. Any of the classical methods of calculating minima of a function are applicable to define this iteration method. Convergence will be obtained when the value of the error metric is below a predetermined threshold value.

Another method consists in defining an interval $[a,b]$ in which it is known that the value of the elevation correction is found. This interval is broken up into a set of distributed values, such as equidistributed ones, and for each of the values $\delta EL_k$ of the interval one calculates $R'_k$ and therefore the value of the metric $e_k$. In this way, the correspondence between $\delta EL_k$ and $e_k$ lets us define a function $e_k = f(\delta EL_k)$ whose minimum is the solution sought.

The function $e_k = f(\delta EL_k)$ is a discrete function.

According to one sample embodiment of the invention, one can use the minimum value of $e_k$ as the

solution of the equation.

According to another sample embodiment of the invention, one can use as the solution of the system the value which minimizes a continuous function, preferably a polynomial function, approximating the function $e_k$ = $f(\delta EL_k)$. The value $\delta EL$ which minimizes the approximating continuous function does not need to correspond to a discrete value $\delta EL_k$. If this is the case, one does not have an associated matrix $R'$ and it will be necessary to take the minimum value $\delta EL$ and apply one time the stage permitting a calculation of $R'$ and therefore $R$. That is, one constructs the system $P'_k \times R'_k = S$ using in place of the vectors $p$ the vectors $p'$ resulting from incrementing $p$ with the correction used, which in this case is $\delta EL$.

Figure 5 shows results from the application of this correction of elevation. The curve C shown in broken line is the tracking error without correction by the rotation matrix $R$ or elevation correction.

The curve D, on the contrary, is the result of performing a correction of the inclination and azimuth errors by the use of the rotation matrix $R$ without performing the elevation correction. Although in the majority of the domain the error is substantially smaller, even zero, the elevation error means that an elevated tracking error occurs on the initial segment.

This graph does not represent a third curve E which is the result obtained by applying the correction via the matrix $R$ as is applied on the curve D as well as the elevation correction. We say it has not been represented because it has been verified that the result is zero and would give rise to a straight line corresponding to the value zero. In this latter case, moreover, it has been considered that the calibration errors are zero.

It has been proven experimentally that, given an absence of elevation errors, the method of the invention which applies a correction via the matrix $R$ eliminates the tracking errors. Likewise, it has been observed that the mere correction of the elevation error does not allow one to correct the inclination and azimuth errors. The method of the invention is optimal when a correction of the elevation error is done in addition to the correction of the rotation matrix $R$.

The subject of this invention is likewise the method of correction of a solar tracker wherein this solar tracker comprises:

- a structural support element (2) of the platform (3), arranged on a fixed base (1),
- the platform (3) being joined to the structural element (2) by a link (4) having one or more degrees of freedom $Y_j, j$ = 1,2, ... along one of more axes of rotation $E_j, j$ = 1,2, ... with respect to said structural element (2) for its orientation in a particular angular position,
- measurement means (5) to determine the orientation $p=(p_x,p_y,p_z)$ of the platform (3) with respect to the sun, in particular, as expressed in the second system of coordinates (x',y',z'),
- a processing unit (6) connected at least to the measurement means (5),
- driving means adapted to move the platform (3) on each of the axes of rotation $E_j, j$ = 1,2, ... where the driving means are actuated by the central processing unit (6) so that they orient the platform (3) in a tracking direction established by the central processing unit (6).

This method of actuation is carried out such that, in one operating mode, the platform (3) in this solar tracker is driven by the driving means which in turn are actuated by the central processing unit (6) carrying out a sun tracking in accordance with a sequence of solar ephemerides of coordinates $s$ = $(s_x,s_y,s_z)$ according to the first system of coordinates $(x,y,z)$ and providing tracking instructions to the driving means in accordance with the corrected coordinates $p$ = $(p_x,p_y,p_z)$ = $R^T \times (s_x,s_y,s_z)$, by an $R$ calculated in a previous correction, not necessarily the immediately prior one, and optionally also the elevation deviation, according to any of the preceding described methods.

According to one sample embodiment of great interest, the solar tracker carries out a determination of the correction of the tracking error according to any of the methods described every few days. Each determination provides a rotation matrix R to be applied and optionally the elevation correction.

In the evolution of the platform (3) following the sun, one or more measurements of the tracking position of the platform (3) $p$ = $(p_x,p_y,p_z)$ is carried out before the tracking instruction corresponding to the position of the sun $s$ = $(s_x,s_y,s_z)$ to determine the corrected coordinates $p$ = $(p_x,p_y,p_z)$ producing the correct orientation of the platform (3), saving the pairs of values $p$ and $s$ preferably for use in later calibrations. According to sample embodiments, once having obtained a first correction it is possible to not carry out further measurements to determine other different corrections or alternatively to carry out determinations of one or more corrections which can be saved so that the control unit establishes the most adequate correction to apply.

The method of determination of the correction making use of the matrix $R$ and optionally the elevation correction are carried out in a processing unit (6) which is likewise the subject of this invention. Also the subject of the invention are processing units (6) adapted to carry out the control over more than one tracker.

It is likewise possible to save in memory the rotation matrices $R$, the elevation corrections, or both, so that the correction of the platform (3) over the course of the year will be making use of certain corrections previously calculated, switching matrix also at predetermined moments of time. The evolution of the platform (3) without human intervention by corrections carried out by the processing unit (6) according to any of the examples described provides an automatic solar tracker.

## Claims

1. Method for determining the correction of tracking errors of the platform (3) of a solar tracker where said solar tracker comprises:

   a) a structural support element (2) of the platform (3), arranged on a fixed base (1), where this fixed base (1) is associated with a first orthogonal system of coordinates (x,y,z) with the z coordinate preferably oriented to the zenith

   b) the platform (3) being joined to the structural element (2) by a link (4) having one or more degrees of freedom $Y_j, j = 1,2, ...$ along one of more axes of rotation $E_j, j = 1,2, ...$ with respect to said structural element (2) for its orientation in a certain angular position,

   c) said structural element (2) is associated with a second orthogonal system of coordinates (x',y',z') linked to the structural element (2) at a point situated before the link (4) having one or more degrees of freedom, this second system of coordinates being essentially parallel to the first system of coordinates (x,y,z) except for deviations, including but not limited to inclination deviations, azimuth deviations, elevation deviations, deviations due to slack or other installation errors or any combination of the foregoing, with respect to the fixed base (1),

   d) measurement means (5) to determine the orientation $p=(p_x,p_y,p_z)$ of the platform (3) with respect to the sun, in particular, able to be expressed in the second system of coordinates (x',y',z'),

   e) a processing unit (6) connected at least to the measurement means (5),

   where said processing unit (6) is adapted to execute instructions for the determination of the correction of tracking errors of the platform (3) so as to at least correct inclination deviations and azimuth deviations in accordance with the following steps:

   - establish values of coordinates $s = (s_x,s_y,s_z)$ tracking the platform (3) at the sun in the first system of coordinates (x,y,z),
   - provide n pairs of positions, at least three, $s_i = (s_{ix},s_{iy},s_{iz})$, $i = 1, 2, ... ,n$ and Pi $= (p_{ix},p_{iy},p_{iz})$, $i = 1, 2, ..., n$, where $s_i$ are Cartesian coordinates of ephemerides of the sun, as expressed in the first system of coordinates (x,y,z) and $p_i$ are the Cartesian coordinates to be adopted by the platform (3) in tracking at said ephemerides after a correction of the deviations determined or estimated by the measurement means (5), as expressed in the second system of coordinates (x',y',z'),
   - establish the system of equations P x R = S,

   which is determined if n = 3 and overdetermined if n > 3 where:

   o the matrix P is formed by the vectors $p_i = (p_{ix},p_{ify},p_{iz})$, $i = 1, 2, ...,n$ arranged in rows,
   o the matrix S is formed by the vectors $s_i = (s_{ix},s_{iz},s_{iz})$, $i = 1, 2, ..., n$ also arranged in rows in the same order as for the vectors $p_i$,

   - and R is a 3 x 3 matrix
   - solve the system P x R = S for the unknown R,
   - provide as a result the matrix R which enables a correction of the tracking vector of the platform (3) per $p = (p_x,p_y,p_z) = (s_x,s_y,s_z) \times R^{-1}$ for at least the inclination and azimuth correction with respect to $s = (s_x,s_y,s_z)$.

2. Method according to the preceding claim, **characterized in that** for a number of points n $\geq$ 3 the system of equations is solved by solving the system $P \times R = S$ by a minimization method, where $R$ is expressed as $R = (P^T \times W \times P)^{-1}P^T \times W \times S$, $W$ being a matrix of positive components.

3. Method according to claim 2, **characterized in that** the matrix $W$ is a matrix with nondiagonal elements being zero and the diagonal elements being strictly positive.

4. Method according to claim 2, **characterized in that** the matrix $W$ is the identity matrix so that $R$ is expressed as $R = (P^T \times P)^{-1}P^T \times S$.

5. Method according to any one of claims 2 to 4, **characterized in that** the minimization of the system of equations is by the method of least squares.

6. Method according to any one of the preceding claims, **characterized in that**, of the set of $n$ pairs of positions $s_i = (s_{ix},s_{iy},s_{iz})$, $i = 1,2,...,n$ and $p_i = (p_{ix},p_{iy},p_{iz})$, $i = 1, 2,...,n$, at least one pair of positions $s_j = (s_{jx},s_{jy},s_{jz})$ and $p_j = (p_{jx},p_{jy},p_{jz})$ corresponds to a virtual point calculated from mathematical equations with real points.

7. Method according to claim 6, **characterized in that** the coordinates $p = (p_x,p_y,p_z)$ for tracking of the platform (3) in the second system of coordinates (x',y',z') are obtained by the following vector calculation $s_j = s_k \times s_r$, and $p_j = p_k \times p_r$ with $k$ and $r$ different from $j$ and different from each other; and both corresponding to a point already determined by the measurement means (5).

8. Method according to claim 6, **characterized in that** the obtaining of virtual points is done by generating intermediate matrices $P'$ and $S'$ from three already existing real measurements; and by calculating the inverse of the transposition of each intermediate matrix one obtains the pairs of virtual points:

$$\begin{pmatrix} s_1 \\ s_2 \\ s_3 \end{pmatrix} = (S'^T)^{-1}; \quad \begin{pmatrix} p_1 \\ p_2 \\ p_3 \end{pmatrix} = (P'^T)^{-1}$$

where the three pairs $s_i$, $p_i$ $i$ = 1, 2, 3 are said virtual points.

9. Method according to claim 6, **characterized in that** the obtaining of virtual points is done by generating intermediate matrices $P'$ and $S'$ from three or more already existing real measurements; and the pairs of virtual points are obtained by the following expressions:

$$\begin{pmatrix} \tilde{s}_1 \\ \tilde{s}_2 \\ \tilde{s}_3 \end{pmatrix} = (S'^T P')^{-1}; \quad \begin{pmatrix} \tilde{p}_1 \\ \tilde{p}_2 \\ \tilde{p}_3 \end{pmatrix} = (P' P'^T)^{-1}.$$

where the three pairs $s_i$, $p_i$ $i$ = 1, 2, 3 are said virtual points.

10. Method according to any one of the preceding claims, **characterized in that** the processing unit (6) performs an estimation of the elevation deviation by the following steps:

- provide a set of values of the elevation deviation $\delta EL_k$, $k$ = 1,2,.. ,
- for each value of the elevation deviation $\delta EL_k$

   o solve the system $P'_k \times R'_k = S$ where:

      ■ the matrix $P'_k$ is formed by the vectors $p'_{ik} = (p'_{ix}, p'_{iy}, p'_{iz})_k$, $i$ = 1,2, ..., $n$ arranged in rows where each vector $p'_{ik}$ is the vector expressed in the first system of coordinates $(x,y,z)$ resulting from incrementing the elevation angle of the vector $p_i$ by the quantity determined by the deviation $\delta EL_k$,
      ■ the matrix $S$ is formed by the vectors $s_i = (s_{ix}, s_{iy}, s_{iz})$, $i$ = 1, 2, ..., $n$ also arranged in rows and in the same order as used for the vectors $p'_{ik}$
      ■ and $R'_k$ is a 3 x 3 matrix;

   o having established a metric for the orthogonality error of a matrix $M$, preferably $e(M) = \|M \times M^T - I\|$, one determines $e_k = e(R'_k)$,

- given the discrete function $e_k = f(\delta EL_k)$ defined

at the points $\delta EL_k$, $k$ = 1,2, .. one provides a value of the elevation deviation $\delta EL$ which minimizes it and the matrix $R$ is determined as the $R'$ which corresponds to the calculation of $\delta EL$.

where for a vector $s = (s_x, s_y, s_z)$ the determination of the correction consists in first carrying out the sum of the value of the elevation deviation $\delta EL$ and then, for the subsequent correction at least in inclination and azimuth, a multiplication by the matrix $R^{-1}$.

11. Method according to claim 10, **characterized in that** each of the values of the elevation deviation $\delta EL_k$, $k$ = 1,2, .., is taken one by one so that the choice of values $\delta EL_k$ and the calculation of the system $P'_k \times R'_k = S$ is done by an iteration system which is applied until the error metric is below a predetermined threshold value.

12. Method according to claim 10, **characterized in that** the set of values of the elevation deviation $\delta EL_k$, $k$ = 1,2, .., belongs to a predetermined range of variation of the elevation deviation $\delta EL$ : $[a,b]$ from which is established an ordered set of $m$ values for the elevation deviation $\delta EL_k$ $k$ = 1, ..., $m$ within the range $[a,b]$ where for each of them the system is solved $P'_k \times R'_k = S$ to obtain the discrete function $e_k = f(\delta EL_k)$ for every value of $k$.

13. Method according to claim 12, **characterized in that** the value used as the minimum of the discrete function $e_k = f(\delta EL_k)$ is the $\delta EL_k$ which produces the smallest of the values of $e_k$.

14. Method according to claim 12, **characterized in that** the value used as the minimum of the discrete function $e_k = f(\delta EL_k)$ is determined:

- by evaluating a function, preferably a polynomial function, approximating the discrete function $e_k = f(\delta EL_k)$,
- by calculating the minimum of the approximating function,

where the minimum of the approximating function is the value of the elevation deviation $\delta EL$ and for this value one solves the system $P'_k \times R'_k = S$ to obtain the matrix $R'$ associated with this value.

15. Method of correction of a solar tracker according to the characteristics a) to e) of claim 1 **characterized in that**:

- the solar tracker additionally comprises driving means adapted to move the platform (3) on each of the rotation axes $E_j$, $j$ = 1,2, ...,
- the driving means are actuated by the central processing unit (6) so as to orient the platform (3) in a tracking direction established by the central processing unit (6),

where

- the platform (3) driven by the driving means which in turn are actuated by the central processing unit (6) carries out a sun tracking in accordance with a sequence of solar ephemerides of coordinates $s = (s_x, s_y, s_z)$ according to the first system of coordinates $(x,y,z)$ providing tracking instructions to the driving means in accordance with the corrected coordinates $p = (p_x,p_y,p_z) = R^T \times (s_x,s_y,s_z)$, by an $R$ calculated in a previous correction, not necessarily the immediately prior one, and optionally also the elevation deviation, according to any of the preceding claims.

16. Method according to the preceding claims, **characterized in that**:

- over the course of the day the processing unit (6) of the solar tracker carries out at least one determination of the correction of the tracking error according to any one of claims 1 to 13,
- the movement of the platform (3) following the sun, one or more measurements of the tracking position of the platform (3) $p = (p_x,p_y,p_z)$ is carried out before the tracking instruction corresponding to the position of the sun $s = (s_x,s_y,s_z)$ to determine the corrected coordinates producing the correct orientation of the platform (3), saving the pairs of values $p$ and $s$ preferably for use in later calibrations.

17. Processing unit (6) adapted to carry out a method for automatic determination of the correction of tracking errors in accordance with any one of claims 1 to 13.

18. Solar tracker, **characterized in that** it comprises:

- a structural support element (2) of the platform (3), arranged on a fixed base (1),
- a platform (3) being joined to the structural element (2) by a link (4) having one or more degrees of freedom $Y_j, j = 1,2, ...$ along one of more axes of rotation $E_j, j = 1,2, ...$ with respect to said structural element (2) for its orientation in a particular angular position,
- measurement means (5) to determine the orientation $p=(p_x,p_y,p_z)$ of the platform (3) with respect to the sun,
- driving means adapted to move the platform (3) on each of the axes of rotation $E_j, j = 1,2, ...,$
- a processing unit (6) according to the preceding claim, connected at least to the measurement means (5) and the driving means.

19. Solar tracker according to claim 18, **characterized in that** the platform (3) comprises photovoltaic panels.

20. Solar tracker according to claim 18, **characterized in that** the platform (3) comprises mirrors for the reflection of incident rays, and where measurement means (5) to determine the orientation $p = (p_x,p_y,p_z)$ of the platform (3) with respect to the sun adopt as the coordinates of the sun the coordinates such that the reflection of the incident radiation coming from the sun reaches the solar receptor.

21. System **characterized in that** it comprises a plurality of solar trackers according to the preceding claim.

22. System according to the preceding claim, **characterized in that** one or more processing units (6) are shared by two or more solar trackers.

23. Solar plant **characterized in that** it comprises a system according to claim 21 or 22.

FIG. 1

FIG. 2

FIG. 3a

FIG. 3b

FIG. 3c

FIG. 4

FIG. 5

# INTERNATIONAL SEARCH REPORT

| International application No. |
|---|
| PCT/ES2013/070893 |

## A. CLASSIFICATION OF SUBJECT MATTER

**See extra sheet**

According to International Patent Classification (IPC) or to both national classification and IPC

## B. FIELDS SEARCHED

Minimum documentation searched (classification system followed by classification symbols)
F24J, G01S, G05D

Documentation searched other than minimum documentation to the extent that such documents are included in the fields searched

Electronic data base consulted during the international search (name of data base and, where practicable, search terms used)

EPODOC, INVENES, WPI

## C. DOCUMENTS CONSIDERED TO BE RELEVANT

| Category* | Citation of document, with indication, where appropriate, of the relevant passages | Relevant to claim No. |
|---|---|---|
| A | US 2012152313 A1 (HINMAN BRIAN ET AL.) 21/06/2012, paragraphs [20, 26, 31]; figure 5. | 1-23 |
| A | US 2003045949 A1 (STONE KENNETH WAYNE ET AL.) 06/03/2003, paragraphs [1, 6, 7, 56, 59, 71]; figures. | 1-23 |
| A | US 4564275 A (STONE KENNETH W) 14/01/1986, column 1, lines 15 - 31, 59 - 68; column 3, lines 27 - 33; column 4, lines 19 - 64; column 6, lines 41 - 49; figures. | 1-23 |
| A | US 2011231031 A1 (WU JIUNN-CHI ET AL.) 22/09/2011, the whole document. | 1-23 |

☐ Further documents are listed in the continuation of Box C.      ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |

| Date of the actual completion of the international search | Date of mailing of the international search report |
|---|---|
| 26/03/2014 | **(27/03/2014)** |

| Name and mailing address of the ISA/ | Authorized officer |
|---|---|
| OFICINA ESPAÑOLA DE PATENTES Y MARCAS Paseo de la Castellana, 75 - 28071 Madrid (España) Facsimile No.: 91 349 53 04 | J. Merello Arvilla Telephone No. 91 3498452 |

Form PCT/ISA/210 (second sheet) (July 2009)

## INTERNATIONAL SEARCH REPORT

Information on patent family members

| | International application No. |
|---|---|
| | PCT/ES2013/070893 |

| Patent document cited in the search report | Publication date | Patent family member(s) | Publication date |
|---|---|---|---|
| US2012152313 A1 | 21.06.2012 | EP2656398 A2 | 30.10.2013 |
| | | US2012245745 A1 | 27.09.2012 |
| | | WO2012083131 A1 | 21.06.2012 |
| | | WO2012083124 A1 | 21.06.2012 |
| | | WO2012083123 A1 | 21.06.2012 |
| | | WO2012083120 A1 | 21.06.2012 |
| | | WO2012083119 A1 | 21.06.2012 |
| | | WO2012083118 A2 | 21.06.2012 |
| | | US2012158205 A1 | 21.06.2012 |
| | | US2012154162 A1 | 21.06.2012 |
| | | US2012158200 A1 | 21.06.2012 |
| | | US2012159596 A1 | 21.06.2012 |
| | | US2012158197 A1 | 21.06.2012 |
| | | US8644995 B2 | 04.02.2014 |
| | | US2012152312 A1 | 21.06.2012 |
| | | US2012152311 A1 | 21.06.2012 |
| | | US2012158362 A1 | 21.06.2012 |
| | | US2012152310 A1 | 21.06.2012 |
| | | US2012072041 A1 | 22.03.2012 |
| | | US2012152309 A1 | 21.06.2012 |
| | | US2012152308 A1 | 21.06.2012 |
| | | US2012004780 A1 | 05.01.2012 |
| | | US8502129 B2 | 06.08.2013 |
| | | US2012026631 A1 | 02.02.2012 |
| | | WO2011133245 A1 | 27.10.2011 |
| | | WO2011133244 A1 | 27.10.2011 |
| | | US2011199707 A1 | 18.08.2011 |
| | | US8564916 B2 | 22.10.2013 |
| | | US2011198935 A1 | 18.08.2011 |
| | | US8618456 B2 | 31.12.2013 |
| US2003045949 A1 | 06.03.2003 | US6704607 B2 | 09.03.2004 |
| US4564275 A | 14.01.1986 | NONE | |
| US2011231031 A1 | 22.09.2011 | US8253089 B2 | 28.08.2012 |
| | | TW201132916 A | 01.10.2011 |
| | | TWI387714B B | 01.03.2013 |

Form PCT/ISA/210 (patent family annex) (July 2009)

**INTERNATIONAL SEARCH REPORT**

International application No.

PCT/ES2013/070893

**CLASSIFICATION OF SUBJECT MATTER**

*F24J2/38* (2014.01)
*F24J2/40* (2006.01)
*G01S3/786* (2006.01)

Form PCT/ISA/210 (extra sheet) (July 2009)